# EUROPÄISCHE PATENTSCHRIFT

(11) **EP 2 365 028 B1**
(45) Veröffentlichungstag und Bekanntmachung des Hinweises auf die Patenterteilung: **03.10.2012**
(21) Anmeldenummer: 10156098.5
(22) Anmeldetag: 10.03.2010
(51) Int. Cl.: C08K 5/00, C08K 5/5313, C08K 5/29, C08L 67/02

(54) **-N=C=N- enthaltende Verbindungen zur Verhinderung des thermischen Abbaus von Metall-dialkylphosphinat enthaltenden Polyalkylenterephthalaten in der Schmelze**
Compounds containing N=C=N- for preventing thermal decomposition in melts
Liaisons contenant du -N=C=N- destinées à éviter la perte thermique pendant la fonte

(43) Veröffentlichungstag der Anmeldung: 14.09.2011
(73) Patentinhaber: LANXESS Deutschland GmbH, 51369 Leverkusen (DE)
(72) Erfinder: Endtner, Jochen Dr., 50679, Köln (DE); Bienmüller, Matthias Dr., 47803 Krefeld (DE); Wambach, Wolfgang Dr., 51065, Köln (DE)

(56) Entgegenhaltungen:
- EP-A1- 1 522 551
- DE-A1- 19 815 120
- DE-A1- 19 920 276

## Beschreibung

Die vorliegende Erfindung betrifft die Verwendung einer -N=C=N- enthaltenden Verbindungen zur Verhinderung oder zur Verminderung des thermischen Abbaus von Metall-dialkylphosphinat enthaltenden Polyalkylenterephthalat-Schmelzen, ein Verfahren zum Einsatz von dieser -N=C=N-enthaltenden Verbindungen bei der Verhinderung oder Verminderung des thermischen Abbaus von Metall-dialkylphosphinat enthaltenden Polyalkylenterephthalat-Schmelzen, Stoffgemische die beim erfindungsgemäßen Verfahren zum Einsatz kommen sowie thermoplastische Formmassen, deren Inhaltsstoffe durch den erfindungsgemäßen Einsatz von dieser -N=C=N- enthaltenden Verbindungen, bzw. darauf basierenden Stoffgemischen, hinsichtlich eines thermischen Abbaus bewahrt werden.

EP 1 400 539 A1 beschreibt Polymerisationskatalysatoren für Polyester auf Basis eines Phosphormetallsalzes, insbesondere wenn das Metall Aluminium ist, wodurch man Polyesterfilme erhält, die in ihrer thermischen Stabilität verbessert sind und deren thermischer Abbau während des Schmelzvorganges verhindert wird.

Auch EP 1 719 790 A1 beschreibt Polykondensationskatalysatoren für Polyester auf Basis eines Gemisches aus einer Aluminium-Verbindung und einer Phosphorverbindung die bevorzugt eine phenolische Gruppe aufweist. Wie in EP 1 400 549 A1 muss jedoch nach der Polykondensation der Katalysator inaktiviert werden (z.B. durch Phosphorverbindungen), um die Thermostabilität des Polyesters in seiner Weiterverarbeitung zu erhöhen.

In E P 1 818 352 A1 wird die thermische Stabilität durch Carboxyl-Endgruppen im Polyalkylenterephthalat-Harz erzielt. Zusätzliche Verbesserungen werden wie beim oben zitierten Stand der Technik durch Zugabe von Phenolverbindungen erhalten.

US 2006/0293491 A1 beschreibt ein Verfahren zur Verbesserung der Thermostabilität von Polyestern durch Reaktion einer acylierten Verbindung mit wenigstens einer phenolischen Gruppe mit einer aromatischen Carbonsäure unter Bestrahlung von Mikrowellen im Rahmen einer Solid-Phase-Polymerisation von Polyester.

Nachteilig an den Verfahren des Standes der Technik ist die zusätzliche Inaktivierung der Substanzen die erst den thermischen Abbau in der Polymerisationsstufe verhindern. Infolgedessen steht die Substanz zur Verhinderung des thermischen Abbaus im Verarbeitungsprozess des Polyesters nicht mehr zur Verfügung wo ebenfalls hohe Temperaturen und gegebenenfalls hohe Drücke zum Einsatz kommen.

Die Aufgabe der vorliegenden Anmeldung bestand nun darin, Metall-dialkylphosphinat enthaltende Polyalkylenterephthalat-Schmelzen hinsichtlich ihres thermischen Abbaus zu stabilisieren, wenn nicht sogar den thermischen Abbau gänzlich zu verhindern so dass die Metall-dialkylphosphinat enthaltenden Polyalkylenterephthalat-Schmelzen neben dem Herstellungsprozeß (Compoundierung) auch den anschließenden Verarbeitungsprozeß (beispielsweise Spritzguß) überstehen und keinen oder zumindest einen deutlich verringerten thermischen Abbau erleiden.

Die Lösung der Aufgabe und Gegenstand der vorliegenden Erfindung ist die Verwendung einer -N=C=N- enthaltenden Verbindungen zur Verhinderung oder Verminderung des thermischen Abbaus von Metall-dialkylphosphinat enthaltenden Polyalkylenterephthalat-Schmelzen.

Bevorzugte Polyalkylenterephthalate sind Polyethylenterephthalat (PET) und Polybutylenterephthalat (PBT). Erfindungsgemäß besonders bevorzugt werden die -N=C=N- enthaltenden Verbindungen zur Verhinderung oder Verminderung des thermischen Abbaus von Metall-dialkylphosphinat enthaltenden PET- und PBT-Schmelzen eingesetzt. Insbesondere werden die -N=C=N- enthaltenden Verbindungen zur Verhinderung oder Verminderung des thermischen Abbaus von Metall-dialkylphosphinat enthaltenden PBT-Schmelzen eingesetzt.

Die erfindungsgemäß einzusetzende -N=C=N- enthaltende Verbindung ist die Verbindung der Formel (IV) 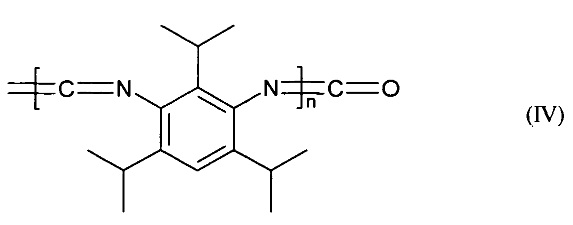 worin
n für eine ganze Zahl von 1 bis 100 steht.

Diese Verbindung der Formel (IV) ist als Stabaxol^{®} P von der Rheinchemie GmbH zu beziehen.

Die vorliegende Erfindung betrifft ein Stoffgemisch enthaltend die -N=C=N- enthaltende Verbindung (IV) und Aluminium-tris[dialkylphosphinaten] sowie die Verwendung der -N=C=N- enthaltenden Verbindungen zur Verhinderung des thermischen Abbaus von Metall-dialkylphosphinat enthaltenden Polyalkylenterephthalat -Schmelzen.

Die vorliegende Erfindung betrifft ein Stoffgemisch enthaltend diese -N=C=N- enthaltende Verbindung (IV) und Aluminium-tris[dialkylphosphinaten] sowie die Verwendung von dieser -N=C=N- enthaltenden Verbindung (IV) zur Verhinderung oder Verminderung des thermischen Abbaus Aluminium-tris[dialkylphosphinat]-enthaltender Polyalkylenterephthalat-Schmelzen.

Erfindungsgemäß steht Alkyl in den Aluminium-tris[dialkylphosphinaten] oder Zink-bis[dialkylphosphinaten] für C₁- bis C₁₀-Alkyl-, bevorzugt für C₂- bis C₆-Alkyl-, besonders bevorzugt für Ethyl.

Die vorliegende Erfindung betrifft deshalb auch die folgenden Stoffgemische sowie deren erfindungsgemäße Verwendung zur Verhinderung oder Verminderung des thermischen Abbaus von Metall-dialkylphosphinat enthaltenden Polyalkylenterephthalat-Schmelzen, wobei Polyethylenterephthalat (PET) oder Polybutylenterephthalat (PBT) bevorzugt sind, und PBT besonders bevorzugt ist:
Verbindungen der Formel (IV) mit Zink-bis [dialkylphosphinat], bevorzugt Zink-bis [diethylphosphinat];
Verbindungen der Formel (IV) mit Aluminium-tris[dialkylphosphinat], bevorzugt Aluminiumtris [diethylphosphinat].

Die vorliegende Erfindung betrifft insbesondere Stoffgemische enthaltend Verbindungen der Formel (IV) mit Aluminium-tris[dialkylphosphinat], insbesondere mit Aluminium-tris[diethylphosphinat] und deren erfindungsgemäße Verwendung zur Verhinderung oder Verminderung des thermischen Abbaus von Polyalkylenterephthalaten in den jeweiligen Schmelzen.

Die -N=C=N- enthaltenden Verbindungen wird in Mengen von 0,03 bis 83 Gew.-Teile, besonders bevorzugt in Mengen von 0,79 bis 19 Gew.-Teilen und ganz besonders bevorzugt in Mengen von 1,5 bis 15 Gew.-Teilen jeweils bezogen auf 100 Gew.-Teile der Summe aus -N=C=N- enthaltender Verbindung und Metall-dialkylphosphinat eingesetzt.

Die hinsichtlich ihres thermischen Abbaus in Schmelzen erfindungsgemäß zu verbessernden Thermoplaste enthalten demnach
1-95 Gew.-% Polyalkylenterephthalat
0,01 - 5 Gew.-% -N=C=N- enthaltende Verbindung (IV)
1-35 Gew.-% Zink-bis[dialkylphosphinat]- oder Aluminium-tris[dialkylphosphinat].

Bevorzugt enthalten die hinsichtlich ihres thermischen Abbaus in Schmelzen erfindungsgemäß zu verbessernden Thermoplaste
5-95 Gew.-% Polyalkylenterephthalat
0,1 - 3 Gew.-% -N=C=N- enthaltende Verbindung (IV)
5-30 Gew.-% Zink-bis[dialkylphosphinat]- oder Aluminium-tris[dialkylphosphinat].

Besonders bevorzugt enthalten die hinsichtlich ihres thermischen Abbaus in Schmelzen erfindungsgemäß zu verbessernden Thermoplaste
10-92 Gew.-% Polyalkylenterephthalat
0,2 - 2 Gew.-% -N=C=N- enthaltende Verbindung (IV)
8,5-25 Gew.-% Zink-bis[dialkylphosphinat]- oder Aluminium-tris[dialkylphosphinat].

Die vorliegende Erfindung betrifft aber auch ein Verfahren zur Verhinderung oder Verminderung des thermischen Abbaus von Metall-dialkylphosphinat enthaltenden Polyalkylenterephthahlat-Schmelzen.

Bevorzugt betrifft die vorliegende Erfindung ein Verfahren zur Verhinderung oder Verminderung des thermischen Abbaus von Metall-dialkylphosphinat enthaltenden Polyalkylenterephthalat-Schmelzen während der Herstellung der Polyalkylenterephthalat-Formmassen durch Aufschmelzen und Vermischen der Einzelkomponenten, bevorzugt. im Compoundier-Verfahren, insbesondere bevorzugt. mit einem Zweiwellenextruder.

Insbesondere bevorzugt betrifft die vorliegende Erfindung ein Verfahren zur Verhinderung oder Verminderung des thermischen Abbaus von Metall-dialkylphosphinat enthaltenden Polyalkylenterephthalat-Schmelzen wie sie beim Einsatz von Polyalkylenterephthalat-Granulaten im Spritzguß, beim Kneten oder in der Extrusion zum Einsatz kommen.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyester, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventioneller Einschneckenextruder, förderwirksamer Einschneckenextruder,

gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Erfindungsgemäße Verfahren zur Verhinderung oder Verminderung des thermischen Abbaus thermoplastischer Formmassen arbeiten bei Schmelztemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Ganz besonders bevorzugt betrifft die vorliegende Erfindung deshalb ein Verfahren zur Verhinderung oder Verminderung des thermischen Abbaus von den Metall-dialkylphosphinaten enthaltenden Polyalkylenterphthalaten in der Schmelze, dadurch gekennzeichnet, dass man bezogen auf 100 Gew.-Teile der Summe aus -N=C=N- enthaltende Verbindung (IV) und den Metall-dialkylphosphinaten 0,03 bis 83 Gew.-Teile -N=C=N- enthaltende Verbindung (IV) einsetzt und die Schmelze innerhalb eines Temperaturbereichs von 230 bis 330°C und bei Drücken von maximal 2500 bar vorliegt.

Erfindungsgemäß in der Schmelze vor thermischen Abbau zu schützende Formmassen können in einer bevorzugten Ausführungsform zusätzlich zu den Komponenten A) bis C) noch
D) 0,001 bis 25 Gew.-%, bevorzugt 0,01 bis 20 Gew.-% Melamincyanurat und/oder Melaminpolyphosphat enthalten, wobei der alleinige Einsatz von Melamincyanurat bevorzugt ist.

In einer weiteren bevorzugten Ausführungsform können die erfindungsgemäß zu behandelnden Formmassen zusätzlich zu den Komponenten A) bis C) und gegebenenfalls D) oder anstelle von D) noch
E) 0,001 bis 70 Gew.-%, vorzugsweise 5 bis 50 Gew.-%, besonders bevorzugt 9 bis 47 Gew.-% wenigstens eines Füll- oder Verstärkungsstoffes enthalten.

Als Füllstoff oder Verstärkungsstoff können aber auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff kann in einer bevorzugten Ausführungsform oberflächenmodifiziert sein, beispielsweise mit einem Haftvermittler bzw. Haftvermittlersystem, besonders bevorzugt auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem, bevorzugt auf Silanbasis, ausgerüstet sein.

Besonders bevorzugte Haftvermittler auf Silanbasis für die Vorbehandlung sind Silanverbindungen der allgemeine Formel (VI)

(X-(CH₂)_{q)k-}Si (O-CᵣH₂ᵣ₊₁)4-k (VI)

worin
X für NH₂-, HO- oder 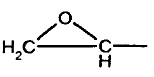 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer weiteren bevorzugten Ausführungsform können die zu behandelnden Formmassen zusätzlich zu den Komponenten A) bis E) oder anstelle von D) und/oder E) noch
F) 0,001 bis 65 Gew.-%, bevorzugt 0,01 bis 30 Gew.-%, insbesondere 0,1 bis 10 Gew.-% wenigstens eines Additivs enthalten.

Additive der Komponente F) im Sinne der vorliegenden Erfindung sind bevorzugt Stabilisatoren, insbesondere UV-Stabilisatoren, Thermostabilisatoren, Gammastrahlenstabilisatoren, Hydrolysestabilisatoren, Antistatika, Fließhilfsmittel, Entformungsmittel, Brandschutzadditive, Emulgatoren, Nukleierungsmittel, Weichmacher, Gleitmittel, Farbstoffe, Pigmente, Additive zur Erhöhung der elektrischen Leitfähigkeit, Verträglichkeitsvermittler oder Elastomermodifikatoren. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können bevorzugt sterisch gehinderte Phenole und Phosphite, ferner Hydrochinone, aromatische sekundäre Amine wie z.B. Diphenylamine, substituierte Resorcine, Salicylate, Benzotriazole, Benzophenone und Bisphenol-A-Epichlorhydrin Copolymere wie z.B. solche der CAS-Nr. 25068-38-6 sowie verschieden substituierte Vertreter dieser Gruppen und deren Mischungen eingesetzt werden.

Als Pigmente bzw. Farbstoffe können bevorzugt. Titandioxid, Zinksulfid, Ultramarinblau, Eisenoxid, Ruß, Phthalocyanine, Chinacridone, Perylene, Nigrosin und Anthrachinone eingesetzt werden.

Als Nukleierungsmittel können bevorzugt Natrium- oder Calciumphenylphosphinat, Aluminiumoxid, Siliziumdioxid sowie bevorzugt Talkum eingesetzt werden.

Als Gleit- und Entformungsmittel können bevorzugt Esterwachse, Pentaerytritoltetrastearat (PETS), langkettige Fettsäuren (z.B. Stearinsäure oder Behensäure) und Ester, deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden, wobei PETS bevorzugt eingesetzt wird.

Als Weichmacher können bevorzugt Phthalsäuredioctylester, Phthalsäuredibenzylester, Phthalsäurebutylbenzylester, Kohlenwasserstofföle, N-(n-Butyl)benzolsulfonamid eingesetzt werden.

Als Additive zur Erhöhung der elektrischen Leitfähigkeit können bevorzugt Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden. Als nanoskalige Fasern können besonders bevorzugt sogenannte "single wall Kohlenstoff-Nanotubes" oder "multi wall Kohlenstoff-Nanotubes" (z.B. der Firma Hyperion Catalysis) eingesetzt werden.

Als Verträglichkeitsvermittler werden vorzugsweise thermoplastische Polymere mit polaren Gruppen eingesetzt.

Erfindungsgemäß kommen demgemäß Polymere zum Einsatz, die
F.1 ein vinylaromatisches Monomer,
F.2 wenigstens ein Monomer ausgewählt aus der Gruppe C₂ bis C₁₂-Alkylmethacrylate, C₂ bis C₁₂-Alkylacrylate, Methacrylnitrile und Acrylnitrile und
F.3 α,β-ungesättigte Komponenten enthaltend Dicarbonsäureanhydride enthalten.

Vorzugsweise werden als Komponente F.1, F.2 und F.3 Terpolymere der genannten Monomeren eingesetzt. Demgemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Reißdehnung bei. Die Menge an Maleinsäureanhydrid in dem Terpolymer kann in weiten Grenzen schwanken. Vorzugsweise beträgt die Menge 0,2 bis 5 Mol-%. Besonders bevorzugt sind Mengen zwischen 0,5 und 1,5 Mol-%. In diesem Bereich werden besonders gute mechanische Eigenschaften bezüglich Zugfestigkeit und Reißdehnung erzielt.

Das Terpolymer kann nach bekannter Weise hergestellt werden. Eine geeignete Methode ist das Lösen von Monomerkomponenten des Terpolymers, z. B. des Styrols, Maleinsäureanhydrids oder Acrylnitrils in einem geeigneten Lösemittel, z. B. Methylethylketon (MEK). Zu dieser Lösung werden ein oder gegebenenfalls mehrere chemische Initiatoren hinzugesetzt. Geeignete Initiatoren sind z.B. Peroxide. Sodann wird das Gemisch für mehrere Stunden bei erhöhten Temperaturen polymerisiert. Anschließend werden das Lösemittel und die nicht umgesetzten Monomere in an sich bekannter Weise entfernt.

Das Verhältnis zwischen der Komponente F.1 (vinylaromatisches Monomer) und der Komponente F.2, z.B. dem Acrylnitrilmonomer in dem Terpolymer liegt vorzugsweise zwischen 80:20 und 50:50.

Als vinylaromatisches Monomer F.1 ist Styrol besonders bevorzugt.

Für die Komponente F.2 ist besonders bevorzugt Acrylnitril geeignet.

Als Komponente F.3 ist besonders bevorzugt Maleinsäureanhydrid geeignet.

Beispiele für erfindungsgemäß einsetzbare Verträglichkeitsvermittler sind in den EP-A 0 785 234 (= US 5 756 576) und EP-A 0 202 214 (= US 4 713 415) beschrieben. Erfindungsgemäß bevorzugt sind insbesondere die in der EP-A 0 785 234 genannten Polymere.

Die Verträglichkeitsvermittler können allein oder in beliebiger Mischung untereinander enthalten sein.

Eine weitere, als Verträglichkeitsvermittler besonders bevorzugte Substanz ist ein Terpolymer von Styrol und Acrylnitril im Gewichtsverhältnis 2,1:1 enthaltend 1 Mol-% Maleinsäureanhydrid sowie ein Terpolymer von Ethen, Glycidylmethacrylat und Methacrylat wie z.B. solche der CAS-Nr. 308079-07-4.

Verträglichkeitsvermittler werden insbesondere dann eingesetzt, wenn die Formmasse Pfropfpolymerisate enthält.

Als Flammschutzmittel bzw. Brandschutzadditive können handelsübliche Halogenverbindungen mit Synergisten oder handelsübliche Stickstoffverbindungen oder zusätzlich zur Komponente C) organische, anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122(= CA 210 9024 A1)) können eingesetzt werden. Ebenso kommen Salze aliphatischer oder aromatischer Sulfonsäuren in Frage. Als halogenhaltige, insbesondere bromierte und chlorierte Verbindungen seien beispielhaft genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol und Decabrom-diphenylether. Als organische Phosphorverbindungen sind z.B. die Phosphorverbindungen gemäß WO-A 98/17720 (= US 6 538 024) geeignet, wie z.B. Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische und anorganische Phosphonsäurederivate und deren Salze, anorganische und gegebenenfalls von der Komponente C) unterschiedliche organische Phosphinsäurederivate und deren Salze, insbesondere von der Komponente C) unterschiedliche Metalldialkylphosphinate, wobei die Komponente C) für Aluminium-tris[dialkylphosphinate] oder Zink-bis[dialkylphosphinate] steht Weitere mögliche Flammschutzmittel bzw. Brandschutzadditive sind außerdem roter Phosphor, Phosphite, Hypophosphite, Phospinoxide, Phosphazene, Melaminpyrophosphat und deren Mischungen. Als Stickstoffverbindungen kommen solche aus der Gruppe der Allantoin-, Cyanursäure-, Dicyandiamid, Glycouril-, Guanidin- Ammonium- und Melaminderivate, bevorzugt Allantoin, Benzoguanamin, Glykouril, Kondensationsprodukte des Melamins z.B. Melem, Melam oder Melom bzw. höher kondensierte Verbindungen dieses Typs und Addukte des Melamins mit anderen Säuren als Cyanursäure (Melamincyanurat) und Polyphosphorsäure (Melaminpolyphosphat) in Frage. Als Synergisten sind z.B. Antimonverbindungen, insbesondere Antimontrioxid, Natriumantimonat und Antimonpentoxid, Zinkverbindungen wie z.B. Zinkborat, Zinkoxid, Zinkphosphat, Zinkstannat und Zinksulfid, Zinnverbindungen wie z.B. Zinnstannat und Zinnborat sowie Magnesiumverbindungen wie z.B. Magnesiumoxid, Magnesiumcarbonat und Magensiumborat geeignet. Auch können dem Flammschutzmittel sogenannte Kohlenstoffbildner wie z.B. Phenol-Formaldehydharze, Polycarbonate, Polyphenylether, Polyimide, Polysulfone, Polyethersulfone, Polyphenylosulfide und Polyetherketone sowie Antitropfinittel wie Tetrafluorethylenpolymerisate zugesetzt werden.

Gegebenenfalls erfindungsgemäß als Additiv einzusetzende Elastomermodifikatoren umfassen ein oder mehrere Pfropfpolymerisate von

F.4 5 bis 95 Gew.-%, vorzugsweise 30 bis 90 Gew.-%, wenigstens eines Vinylmonomeren auf

F.5 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage F.5 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere F.4 sind vorzugsweise Gemische aus

F.4.1 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und

F.4.2 1 bis 50 Gew.-% Vinylcyanide (ungesättigte Nitrile wie Acrylnitril und Methacrylnitril) und/oder (Meth)Acrylsäure-(C₁-C₈)-**Alkylester** (wie e z . B . Methylmethacrylat, Glycidylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere F.4.1 sind ausgewählt aus mindestens einem der Monomere Styrol, α-Methylstyrol und Methylmethacrylat, bevorzugte Monomere F.4.2 sind ausgewählt aus mindestens einem der Monomere Acrylnitril, Maleinsäureanhydrid, Glycidylmethacrylat und Methylmethacrylat.

Besonders bevorzugte Monomere sind F.4.1 Styrol und F.4.2 Acrylnitril.

Für die in den Elastomermodifikatoren einzusetzenden Pfropfpolymerisate geeignete Pfropfgrundlagen F.5 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen F.5 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß F.4.1 und F.4.2), mit der Maßgabe, dass die Glasübergangstemperatur der Komponente F.5 bei <10°C, vorzugsweise bei <0°C, besonders bevorzugt bei <-10°C liegt.

Besonders bevorzugte Propfgrundlagen F.5 sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage F.5 beträgt bevorzugt mindestens 30 Gew.-%, besonders bevorzugt mindestens 40 Gew.-% (in Toluol gemessen).

Die Elastomermodifikatoren bzw. Pfropfpolymerisate werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Pfropfgrundlagen F.5 die vorzugsweise Polymerisate aus Acrylsäurealkylestern, gegebenenfalls mit bis zu 40 Gew.-%, bezogen auf F.5 anderen polymerisierbaren, ethylenisch ungesättigten Monomeren. Zu den bevorzugten polymerisierbaren Acrylsäureestern gehören C₁-C₈-Allcylester, beispielsweise Methyl-, Ethyl-, Butyl-, n-Octyl- und 2-Ethylhexylester; Halogenallcylester, vorzugsweise Halogen-C₁-C₈-alkyl-ester, wie Chlorethylacrylat, Glycidylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage F.5.

Bei cyclischen vernetzenden Monomeren mit mindestens 3 ethylenisch ungesättigten Gruppen ist es vorteilhaft, die Menge auf unter 1 Gew.-% der Pfropfgrundlage F.5 zu beschränken.

Bevorzugte "andere" polymerisierbare, ethylenisch ungesättigte Monomere, die neben den Acrylsäureestern gegebenenfalls zur Herstellung der Pfropfgrundlage F.5 dienen können, sind z.B. Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage F.5 sind Emulsionspolymerisate, die einen Gelgehalt von mindestens 60 Gew.-% aufweisen.

Weitere geeignete Pfropfgrundlagen gemäß F.5 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Hierzu können z.B. Elastomere mit einer Blockcopolymerstruktur gehören. Hierzu können weiterhin z.B. thermoplastisch aufschmelzbare Elastomere gehören. Beispielhaft und bevorzugt sind hier EPM-, EPDM- und/oder SEBS-Kautschuke genannt.

Erfindungsgemäß einzusetzende Fließhilfsmittel sind aus der Literatur wie z.B. Kunststoffe 2000, 9, S. 116-118 bekannt und können beispielsweise Fettsäureester von Polyolen oder Amide aus Fettsäuren oder Aminen sein.

Alternativ zu oberflächenaktiven Fließhilfsmitteln können interne Fließhilfsmittel eingesetzt werden, die mit den Polymerharzen verträglich sind. Hierfür eignen sich beispielsweise niedermolekulare Verbindungen oder verzweigte, hochverzweigte oder dendritische Polymere mit einer dem Polymerharz ähnlichen Polarität. Derartige hochverzweigte oder dendritische Systeme sind aus der Literatur bekannt und können beispielsweise auf verzweigten Polyestern, Polyamiden, Polyesteramiden, Polyethern oder Polyaminen basieren, wie sie in Kunststoffe 2001, 91, S. 179-190, oder in Advances in Polymer Science 1999, 143 (Branched Polymers 11), S. 1-34 beschrieben sind.

Erfindungsgemäß bevorzugt einzusetzende Fließhilfsmittel können Copolymeristate, bevorzugt statistische Copolymerisate aus mindestens einem Olefin, bevorzugt α-Olefin und mindestens einem Methacrylsäureester oder Acrylsäureester eines aliphatischen Alkohols, wobei der MFI des Copolymerisats 100 g / 10 min, vorzugsweise 150 g / 10 min, besonders bevorzugt 300 g / 10 min nicht unterschreitet. In einer bevorzugten Ausführungsform besteht das Copolymerisat zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen (ausgewählt aus der Gruppe umfassend Epoxide, Oxetane, Anhydride, Imide, Aziridine, Furane, Säuren, Amine, Oxazoline) enthalten.

Geeignete Olefine, bevorzugt α-Olefine als Bestandteil der Copolymerisate weisen bevorzugt zwischen 2 und 10 Kohlenstoff Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates ausschließlich über die Olefine in das Copolymer eingebracht.

Der Gehalt des Olefins am Copolymerisat liegt zwischen 50 und 90 Gew.-%, bevorzugt zwischen 55 und 75 Gew.-%.

Das in einer bevorzugten Ausführungsform als Fließhilfsmittel einzusetzende Copolymerisat wird weiterhin definiert durch den zweiten Bestandteil neben dem Olefin. Als zweiter Bestandteil sind Alkyl- oder Arylalkylester der Acrylsäure oder Methacrylsäure geeignet, deren Alkyl- oder Arylalkylgruppe aus 5-30 Kohlenstoffatomen gebildet wird. Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Methacrylsäure- oder Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Bevorzugt kann die Alkyl- oder Arylalkylgruppe des Methacrylsäure- oder Acrylsäureesters ausgewählt sein aus der Gruppe umfassend 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkyl- oder Arylalkylgruppen mit 6-20 Kohlenstoffatomen. Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur T_{G} führen.

Erfindungsgemäß besonders bevorzugt wird als Fließhilfsmittel ein Copolymerisat eingesetzt bei dem das Olefin mit Acrylsäure-(2-ethyl)-hexylester copolymerisiert wird. Ebenfalls geeignet sind Mischungen der beschriebenen Acrylsäure- oder Methacrylsäurester.

Bevorzugt ist hierbei die Verwendung von mehr als 60 Gew.-%, besonders bevorzugt mehr als 90 Gew.-% und ganz besonders bevorzugt die Verwendung von 100 Gew.-% Acrylsäure-(2-ethyl)-hexylester bezogen auf die Gesamtmenge an Acrylsäure- und Methacrylsäurester in Copolymerisat.

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates ausschließlich über die Acrylsäure- oder Methacrylsäurester in das Copolymer eingebracht.

Der Gehalt der Acrylsäure- oder Methacrylsäureester am Copolymerisat liegt zwischen 10 und 50 Gew.-%, bevorzugt zwischen 25 und 45 Gew.-%.

Als Fließhilfsmittel erfindungsgemäß geeignete Copolymerisate zeichnen sich neben der Zusammensetzung durch das niedrige Molekulargewicht aus. Dementsprechend sind für die erfindungsgemäß vor thermischem Abbau zu bewahrenden Formmassen nur Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen.

Erfindungsgemäß als Fließhilfsmittel besonders geeignete Copolymerisate können ausgewählt sein aus der Gruppe der von der Fa. Atofina unter dem Markennamen Lotryl^{®} EH angebotenen Materialien, die gewöhnlich als Schmelzkleber Verwendung finden.

Zur Klarstellung sei angemerkt, dass vom Rahmen der vorliegenden Erfindung alle aufgeführten , allgemeinen oder in Vorzugsbereichen genannten Definitionen und Parameter in beliebigen Kombinationen umfasst sind. Erfindungsgemäß ergeben sich für die vor thermischem Abbau zu bewahrenden thermoplastischen Formmassen folgende bevorzugte Kombinationen der Komponenten
A,B,C; A,B,C,D; A,B,C,E; A,B,C,F; A,B,C,D,E; A,B,C,D,F, A,B,C,D,E,F.

Die Summe der Anteile aller Komponenten ergänzt sich jeweils zu 100 Gew.-%.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

### Beispiele

Zum Nachweis der erfindungemäß beschriebenen Verbesserungen der Compoundstabilität in der Schmelze werden die einzelnen Komponenten in einem Zweiwellenextruder (ZSK 26 Mega Compounder der Fa. Coperion Werner & Pfleiderer (Stuttgart, Deutschland) bei Temperaturen zwischen 260 und 290°C in der Schmelze vermischt, als Strang ausgetragen, bis zur Granulierfähigkeit abgekühlt und granuliert.

Vor weiteren Schritten wird das Granulat bei 120°C im Vakuumtrockenschrank für ca. 2h getrocknet.

Als Maß für die Schädigung in der Schmelze wird eine MVR-Messung nach ISO 1133 an einem Fließprüfgerät B4106.200 der Fa. Zwick/Roell nach 5 und 20 Minuten Verweilzeit durchgeführt.

Die Prüfung nach 5 minütiger Verweilzeit im Fließprüfgerät erlaubt eine vergleichende Beurteilung des Abbaus in der Schmelze während der vorausgegangenen Compoundierung im Zweiwellenextruder. Die Prüfung nach 20 minütiger Verweilzeit gibt schließlich einen direkten Vergleich des Abbaus der Zusammensetzung in der Schmelze und lässt sich daher beispielsweise auf Verarbeitungsschritte in der Schmelze nach der Compoundierung (z.B. Spritzguss) übertragen. Dabei lässt sich ein größerer Abbau durch eine stärkere Verringerung der Schmelzviskosität und damit einhergehend einem größeren MVR Wert-Anstieg zeigen.

In den Versuchen wurde verwendet:
Komponente A1: Lineares Polybutylenterephthalat (Pocan® B 1300, Handelsprodukt der Lanxess Deutschland GmbH, Leverkusen, Deutschland) mit einer intrinsischen Viskosität von ca. 0,93 cm3/g (gemessen in Phenol : 1,2-Dichlorbenzol = 1: 1 bei 25°C)
Komponente A2: Lineares Polyethylenterephthalat (Polyester Chips PET V004, Fa. Invista, Wichita ,USA)
Komponente B: Polymere -N=C=N- enthaltende Verbindung der Formel IV (Stabaxol P100 der Fa. Rheinchemie Rheinau GmbH, Mannheim, Deutschland)
Komponente C1: Aluminium-tris[diethylphosphinat] (Exolit® OP1240 der Fa. Clariant GmbH, Franfurt am Main, Deutschland)
Komponente C2: Zink-bis[diethylphosphinat] (Exolit^{®} OP950 der Clariant GmbH, Franfurt am Main, Deutschland)
Komponente D1: Melamincyanurat, (Melapur® MC25, der Fa. CIBA, Basel, Schweiz) Komponente D2: Melaminpolyphosphat (Melapur® 200/70 der Fa. CIBA, Basel, Schweiz)
Komponente E: Mit silanhaltigen Verbindungen beschlichtete Glasfaser mit einem Durchmesser von 10 µm (CS 7967, Handelsprodukt der Lanxess N.V., Antwerpen, Belgien)
Komponente F1 : Für die Verwendung in thermoplastischen Polyestern gebräuchliche Entformungsmittel wie z.B. Montansäureester (LicowaxⓇ E der Fa. Clariant GmbH, Franfurt am Main, Deutschland) oder Pentaerythrit-tetrastearat (PETS) (Loxiol VPG 861, Fa. Cognis Deutschland GmbH, Düsseldorf, Deutschland)
Die verwendeten Entformungsmittel (Komponente F1) stimmen für entsprechende Vergleichsbeispiele und Beispiele jeweils in Art und Menge überein.
Komponente F2: Nukleierungsmittel: Talkum [CAS-Nr. 14807-96-6]. Die verwendeten Nukleierungsmittel stimmen für entsprechende Vergleichsbeispiele und Beispiele jeweils in Art und Menge überein.
Komponente F3: Thermostabilisator: Tetrakis(2,4-di-tert-butylphenyl)-[1,1-biphenyl]-4,4'-diylbisphosphonit (Irgafos P-EPQ der Fa. CIBA, Basel, Schweiz.
Anmerkung: Die hier gelisteten Komponenten F1, F2 und F3 sind auf die Tabellen 1 und 2 bezogen, jedoch nicht auf die unter Komponente F) definierten Additive F.1, F.2 und F.3.
Die Summe der Anteile der Komponenten ergänzt sich zu 100 Gew.-%.

**Tabelle 1**

| Komponente | Einheit | Ex 1 | Com. Ex 1 | Ex 2 | Com. Ex 2 | Ex 3 | Com. Ex 3 | Ex 5 | Com. Ex 5 |
|---|---|---|---|---|---|---|---|---|---|
| A1 | [%] | 77,7 | 79,7 | 83,85 | 84,6 | 61,25 | 61,7 | 30,1 | 30,6 |
| A2 | [%] | | | | | | | 20 | 20 |
| B | [%] | 2 | | 0,75 | | 0,45 | | 0,5 | |
| C1 | [%] | 13,3 | 13,3 | 10 | 10 | 18 | 18 | 12 | 12 |
| D1 | [%] | 6,7 | 6,7 | 5 | 5 | 7 | 7 | 12 | 12 |
| E | [%] | | | | | 13 | 13 | 25 | 25 |
| F1 | [%] | 0,3 | 0,3 | 0,3 | 0,3 | 0,3 | 0,3 | 0,3 | 0,3 |
| F3 | [%] | | | 0,1 | 0,1 | | | 0,1 | 0,1 |
| MVR nach 5min 260°C/ 2,16 kg | [cm³/10min] | 31 | 41 | 41 | 65 | 26 | 28 | 9 | 13 |
| MVR nach 20min 260°C/ 2,16 kg | [cm³/10min] | 31 | 70 | 50 | 96 | 35 | 41 | 12 | 18 |

Angaben der Komponenten in Gew.-% bezogen auf die Gesamtformmasse

**Tabelle 2**

| Komponente | Einheit | Ex 6 | Com. Ex 6 |
|---|---|---|---|
| A1 | [%] | 26,4 | 27,9 |
| A2 | [%] | 19 | 19 |
| B | [%] | 1,5 | |
| C2 | [%] | 11 | 11 |
| D2 | [%] | 11 | 11 |
| E | [%] | 30 | 30 |
| F1 | [%] | 0,5 | 0,5 |
| F2 | [%] | 0,5 | 0,5 |
| F3 | [%] | 0,1 | 0,1 |
| MVR nach 5min 270°C/2,16 kg | [cm³/10min ] | 12 | 26 |
| MVR nach 20min 270°C/2,16 kg | [cm³/10min] | 35 | 90 |

Angaben der Komponenten in Gew.-% bezogen auf die Gesamtformmasse

Tabelle 1 und 2 zeigen in den erfindungsgemäßen Beispielen jeweils niedrigere MVR Werte nach 5 Minuten, was für die deutlich geringere Schädigung bei der vorausgegangenen Schmelzeextrusion im Zweiwellenextruder spricht. Ferner wird gezeigt, dass in den erfindungsgemäßen Beispielen die MVR Werte nach 20 Minuten weniger stark von denen bei 5 Minuten abweichen als die der nicht erfindungsgemäßen Vergleichsbeispiele, was den geringeren Abbau in der Schmelze in den erfindungsgemäßen Beispielen belegt.

## Patentansprüche

1. Stoffgemisch enthaltend die Verbindung der Formel (IV) 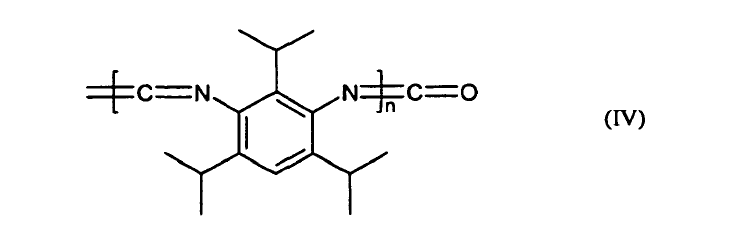 worin n für eine ganze Zahl von 1 bis 100 steht, mit Aluminium-tris [diethylphosphinat].

2. Verwendung der Verbindung der Formel (IV) gemäß Anspruch 1 zur Verhinderung oder Verminderung des thermischen Abbaus von Metall-dialkylphosphinat enthaltenden Polyalkylenterephthalat-Schmelzen.

3. Verwendung gemäß Anspruch 2, **dadurch gekennzeichnet, dass** es sich um Polyethylenterephthalat-Schmelzen oder Polybutylenterephthalat-Schmelzen handelt.

4. Verfahren zur Verhinderung oder Verminderung des thermischen Abbaus von Metall-dialkylphosphinat enthaltenden Polyalkylenterephthalat in der Schmelze, **dadurch gekennzeichnet, dass** man bezogen auf 100 Gew.-Teile der Summe aus -N=C=N-enthaltender Verbindung und Metall-dialkylphosphinat 0,03 bis 83 Gew.-Teile -N=C=N-enthaltende Verbindung einsetzt und die Schmelze innerhalb eines Temperaturbereichs von 230 bis 330° C und bei Drücken von maximal 2500 bar vorliegt und als -N=C=N-enthaltende Verbindung die Verbindung der Formel (IV) 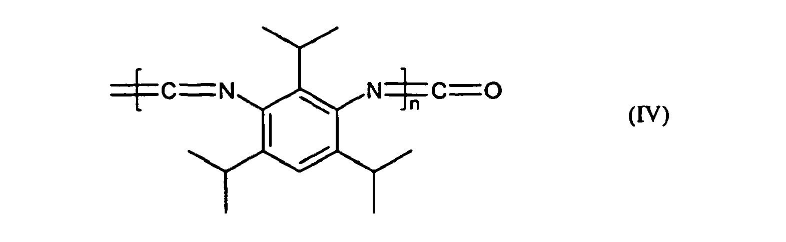 worin n für eine ganze Zahl von 1 bis 100 steht, und als Metall-dialkylphosphinat Aluminium-tris [diethylphosphinat] eingesetzt wird.

5. Formmassen enthaltend
A) 1-95 Gew.- % Polyalkylenterephthalat
B) 0,01-5 Gew.% -N=C=N- enthaltende Verbindung und
C) 1-35 Gew.% Aluminium-tris[dialkylphosphinat], wobei als -N=C=N- enthaltende Verbindung eine Verbindung der Formel (IV) 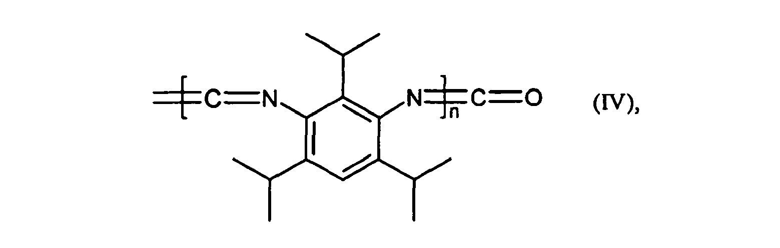 worin n für eine ganze Zahl von 1 bis 100 steht, eingesetzt wird.

6. Formmassen gemäß Anspruch 5, **dadurch gekennzeichnet, dass** diese noch D) 0,001 bis 25 Gew.Teile Melamincyanurat und/oder Melaminpolyphosphat enthalten.

7. Formmassen gemäß einem der Ansprüche 5 oder 6, **dadurch gekennzeichnet, dass** diese noch E) 0,001 bis 70 Gew.-Teile wenigstens eines Füll- oder Verstärkungsstoffes enthalten.

8. Formmassen gemäß einem der Ansprüche 5 oder 7, **dadurch gekennzeichnet, dass** diese noch F) 0,001 bis 65 Gew.-Teile wenigstens eines Additivs enthalten.

## Claims

1. Substance mixture comprising the compound of the formula (IV) 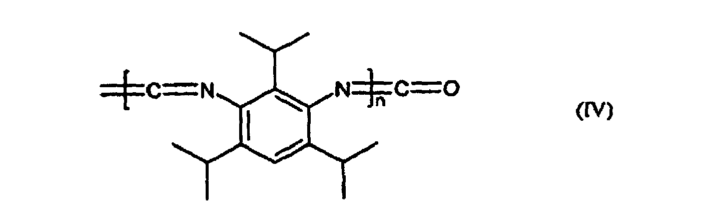 in which n is an integer from 1 to 100, with aluminium tris[diethylphosphinate].

2. Use of the compound of the formula (IV) according to Claim 1 for preventing or reducing thermal degradation of polyalkylene terephthalate melts comprising metal dialkylphosphinate.

3. Use according to Claim 2, **characterized in that** polyethylene terephthalate melts or polybutylene terephthalate melts are involved.

4. Process for preventing or reducing thermal degradation of polyalkylene terephthalate in the melt comprising metal dialkylphosphinate, **characterized in that** from 0.03 to 83 parts by weight of compound comprising -N=C=N- are used, based on 100 parts by weight of the entirety of compound comprising -N=C=N- and metal dialkylphosphinate, and the melt is present within a temperature range of from 230 to 330°C and at pressures of at most 2500 bar, and the compound comprising -N=C=N-used comprises the compound of the formula (IV) 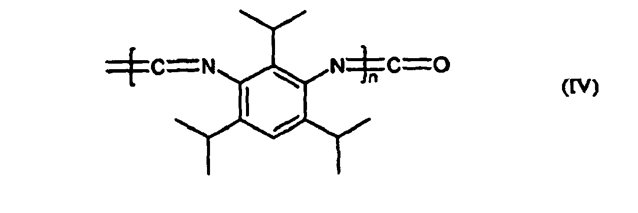 in which n is an integer from 1 to 100, and the metal dialkylphosphinate used comprises aluminium tris[diethylphosphinate].

5. Moulding compositions comprising
A) from 1 to 95% by weight of polyalkylene terephthalate
B) from 0.01 to 5% by weight of compound comprising -N=C=N- and
C) from 1 to 35% by weight of aluminium tris[dialkylphosphinate], where the compound used comprising -N=C=N- comprises a compound of the formula (IV) 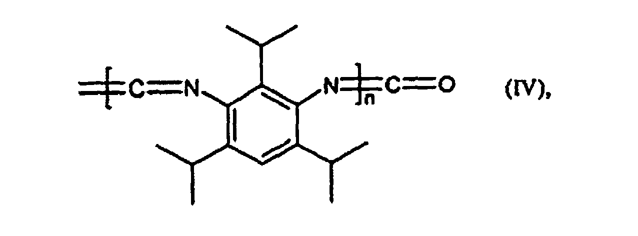 in which n is an integer from 1 to 100.

6. Moulding compositions according to Claim 5, **characterized in that** these also comprise D) from 0.001 to 25 parts by weight of melamine cyanurate and/or melamine polyphosphate.

7. Moulding compositions according to either of Claims 5 and 6, **characterized in that** these also comprise E) from 0.001 to 70 parts by weight of at least one filler or reinforcing material.

8. Moulding compositions according to either of Claims 5 and 7, **characterized in that** these also comprise F) from 0.001 to 65 parts by weight of at least one additive.

## Revendications

1. Mélange de substances contenant le composé de
formule (IV) 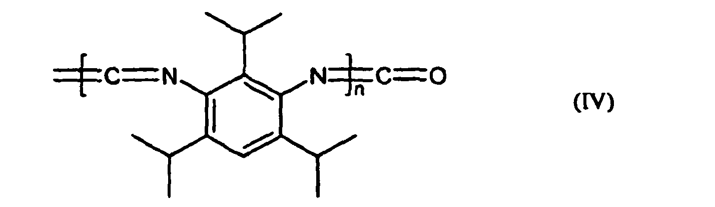 dans laquelle n vaut un nombre entier de 1 à 100, avec de l'aluminiumtris[diéthylphosphinate].

2. Utilisation du composé de formule (IV) selon la revendication 1 pour empêcher ou diminuer la dégradation thermique de masses fondues de poly(téréphtalate d'alkylène) contenant du dialkylphosphinate de métal.

3. Utilisation selon la revendication 2, **caractérisée en ce qu'**il s'agit, de masses fondues de poly(téréphtalate d'éthylène), ou de masses fondues de poly(téréphtalate de butylène).

4. Procédé pour empêcher ou diminuer la dégradation thermique de poly(téréphtalate d'alkylène) contenant du dialkylphosphinate de métal dans la masse fondue, **caractérisé en ce qu'**on utilise, par rapport à 100 parties en poids de la somme du composé contenant - N=C=N- et de dialkylphosphinate de métal, 0,03 à 83 parties en poids de composé contenant -N=C=N- et la masse fondue se trouve dans une plage de température de 230 à 330°C et à des pressions d'au maximum 2500 bars et on utilise comme composé contenant -N=C=N- le composé de formule (IV) 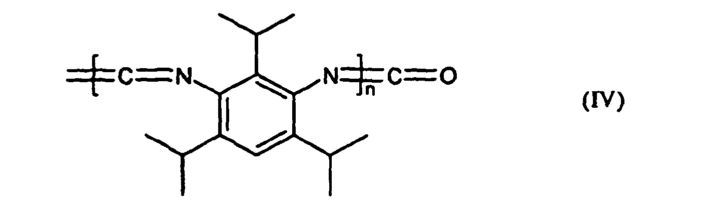 dans laquelle n représente un nombre entier de 1 à 100, et comme dialkylphosphinate de métal de l'aluminiumtris[diéthylphosphinate].

5. Masses de moulage, contenant
A) 1 à 95% en poids en poids de poly(téréphtalate d'alkylène),
B) 0,01-5% en poids de composé contenant -N=C=N- et
C) 1-35% en poids d'aluminiumtris[dialkylphosphinate], en utilisant, comme composé contenant -N=C=N-, un composé de formule (IV) 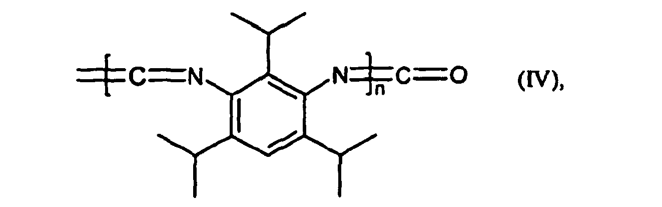 dans laquelle n représente un nombre entier de 1 à 100.

6. Masses de moulage selon la revendication 5, **caractérisées en ce qu'**elles contiennent encore D) 0,001 à 25 parties en poids de mélamine-cyanurate et/ou de mélamine-polyphosphate.

7. Masses de moulage selon l'une quelconque des revendications 5 ou 6, **caractérisées en ce qu'**elles contiennent encore E) 0,001 à 70 parties en poids d'au moins une charge ou substance de renforcement.

8. Masses de moulage selon l'une quelconque des revendications 5 ou 7, **caractérisées en ce qu'**elles contiennent encore F) 0, 001 à 65 parties en poids d'au moins un additif.
